# EUROPÄISCHE PATENTSCHRIFT

(11) **EP 1 614 928 B1**
(45) Veröffentlichungstag und Bekanntmachung des Hinweises auf die Patenterteilung: **11.03.2009**
(21) Anmeldenummer: 05012311.6
(22) Anmeldetag: 08.06.2005
(51) Int. Cl.: F16F 9/05

(54) **Luftfeder, insbesondere für ein Kraftfahrzeug**
Air spring, particularly for a motor vehicle
Ressort pneumatique, en particulier pour un véhicule automobile

(30) Priorität: 09.07.2004 DE 102004033199
(43) Veröffentlichungstag der Anmeldung: 11.01.2006
(73) Patentinhaber: AUDI AG, 85045 Ingolstadt (DE)
(72) Erfinder: Merkes, Wolfgang, 81929 München (DE); Stingl, Hanno, 85110 Kipfenberg (DE)
(74) Vertreter: Asch, Konrad

(56) Entgegenhaltungen:
- US-A- 5 667 203
- US-A1- 2002 041 063
- US-A1- 2003 020 218

## Beschreibung

Die Erfindung betrifft eine Luftfeder, insbesondere für ein Kraftfahrzeug, nach dem Oberbegriff des Anspruchs 1, wie sie z.B. in der US 2003/0020218 A1 gezeigt wird.

Eine aus der DE 37 26 923 C2 bekannte, Luftfeder weist einen elastomeren Rollbalg auf, der einerseits an einem ersten Befestigungsteil und andererseits an einem zum ersten Befestigungsteil axial beabstandeten zweiten Befestigungsteil jeweils luftdicht angebunden ist zur Ausbildung eines volumenvariablen Luftfederraumes. Die beiden Befestigungsteile sind dabei an den gegeneinander abzufedernden Bauteilen befestigt. Zudem ist das erste Befestigungsteil als Abrollkolben ausgebildet, an dem der Rollbalg bei einer im wesentlichen axial ausgerichteten Federbewegung unter Ausbildung einer ersten Rollfalte abrollt. Das zweite Befestigungsteil ist zweiteilig aus einem Lagerteil, das an einem Bauteil befestigbar ist, und einem Zwischenteil, an dem der Rollbalg angebunden ist, aufgebaut. Dabei sind das Lagerteil und das Zwischenteil luftdicht mit einem umlaufenden Federlagerring aus Elastomermaterial verbunden.

Konkret ist diese Luftfeder zur Abfederung eines Kraftfahrzeuges eingesetzt. Das Zwischenteil ist ringförmig ausgeführt und mit radialem Abstand zum Lagerteil angeordnet. Der dabei gebildete ringförmige Zwischenraum zwischen dem Lagerteil und dem Zwischenteil ist durch den umlaufenden Federlagerring aus Elastomermaterial ausgefüllt, so dass dadurch das Lagerteil und das Zwischenteil axial federnd miteinander verbunden sind. Die Federsteifigkeit des Federlagerrings ist dabei kleiner als die Federsteifigkeit des Rollbalgs ausgelegt.

Des weiteren ist aus der DE 199 52 919 A1 eine Luftfeder bekannt, bei der ebenfalls ein erstes Befestigungsteil als Abrollkolben für einen Rollbalg ausgebildet ist. Ein zweites Befestigungsteil, an dem das zweite Ende des Rollbalgs luftdicht angebunden ist, ist auch hier zweiteilig ausgebildet, wobei zwischen den beiden Einzelteilen des zweiten Befestigungsteiles ein Gelenk angeordnet ist. Zudem ist aus der US 6,386,523 B1 eine Luftfeder bekannt, bei der sowohl das erste Befestigungsteil als auch das zweite Befestigungsteil als Abrollkolben ausgeführt sind, so dass der Rollbalg bei einer Federbewegung zwei Rollfalten ausbildet.

Aufgabe der Erfindung ist es, eine gattungsgemäße Luftfeder, insbesondere für ein Kraftfahrzeug, so weiterzubilden, dass auf einfache Weise die Federeigenschaften der Luftfeder verbessert sind.

Diese Aufgabe wird mit den Merkmalen des Anspruchs 1 gelöst.

Gemäß Anspruch 1 ist der umlaufende Federlagerring als Konuslagerring ausgebildet, der im Querschnitt gesehen schräg gegenüber der Axialrichtung der Luftfeder um einen Anstellwinkel angestellt ist. Die Konusverjüngung des Konuslagerrings ist dabei vom Rollbalg weggerichtet, so dass das Zwischenteil gegenüber dem Lagerteil kardanisch bewegbar ist. Der Durchmesser des Federlagerrings ist so gewählt, dass er in etwa dem wirksamen Durchmesser der Luftfeder entspricht. Dadurch wird erreicht, dass die auf den Zwischenring in axialer Richtung wirkenden Kräfte (Druckkräfte) weitgehend ausgeglichen sind. Das ermöglicht eine weiche Auslegung des Federlagerrings.

Insbesondere ist die Belastung des Balges aufgrund kardanischer Bewegungen zwischen den beiden abzufedernden Bauteilen reduziert, dadurch dass der Zwischenring des unteren Befestigungsteils gegenüber dem Topf gelenkig gelagert ist.

Am Zwischenteil ist ein Zwischenteil-Konuslagerringbereich und am Lagerteil ein Lagerteil-Konuslagerringbereich ausgebildet. Beide Konuslagerringbereiche sind dabei im zusammengebauten Zustand der Luftfeder einander zugeordnet und beabstandet voneinander angeordnet, so dass der Konuslagerring zwischen dem Zwischenteil-Konuslagerringbereich und dem Lagerteil-Konuslagerringbereich einvulkanisiert ist. Durch den einvulkanisierten Konuslagerring ist zudem eine funktionssichere Dichtigkeit der Luftfeder im Bereich des Konuslagerrings gewährleistet. Die beiden Konuslagerringbereiche einerseits am Zwischenteil und andererseits am Lagerteil verlaufen im Querschnitt durch die Luftfeder gesehen beabstandet voneinander in etwa parallel, so dass der Konuslagerring umlaufend eine gleiche Materialstärke aufweist. Durch das Einvulkanisieren ist eine einfache und funktionssichere Anbringung des Konuslagerrings zwischen den beiden Konuslagerringbereichen vorgeschlagen.

Vorteilhaft hierbei ist, dass aufgrund des im Querschnitt gesehen schräg gestellten Konuslagerrings eine Erhöhung der Freiheitsgrade der Bewegung des Zwischenteils gegenüber dem Lagerteil erhalten wird, so dass dadurch die Federeigenschaften der Luftfeder verbessert sind. Durch die elastische Lagerung des Zwischenteils gegenüber dem Lagerteil kann eine dynamische Federverhärtung reduziert werden, wobei aufgrund des Konuslagerrings zugleich eine kardanische Auslenkung des Zwischenteils gegenüber dem Lagerteil möglich ist. In Abhängigkeit des Anstellwinkels, der die im Querschnitt gesehene Schrägstellung des Konuslagerrings ergibt, wird ein Drehpunkt für das Zwischenteil erhalten, um den das Zwischenteil gegenüber dem Lagerteil "verdrehbar" ist. Bei der Auslegung der gesamten Luftfeder ist dabei darauf zu achten, dass dieser Drehpunkt beabstandet zu einem Angriffspunkt der über den Rollbalg eingeleiteten Druckkraft liegt. Dadurch ergibt sich ein stabiles Kräftegleichgewicht am Zwischenteil. D. h., dass bei einer Auslenkung des Lagerteils in Verbindung mit der über den Rollbalg eingeleitete Druckkraft ein Rückstellmoment erhalten wird. Je größer der Abstand zwischen dem Drehpunkt des Zwischenteils und dem Angriffspunkt der über den Rollbalg eingeleiteten Druckkraft ist, umso größer ist diese Rückstellwirkung.

Die Lage des Drehpunkts des Zwischenteils ist dabei abhängig vom Anstellwinkel, d. h. von der Schrägstellung des Konuslagerrings gegenüber der Axialrichtung der Luftfeder. Gemäß Anspruch 2 kann der Anstellwinkel in einem Bereich zwischen 15 und 40° liegen, bevorzugt liegt der Anstellwinkel zwischen 20 und 30°, höchstbevorzugt bei 25°. Insgesamt können mittels einer Veränderung des Anstellwinkels die Federeigenschaften des Konuslagers und damit der Luftfeder beeinflusst werden.

In einer vorteilhaften Ausgestaltung gemäß Anspruch 4 kann das Zwischenteil wenigstens im Bereich der Anbindung des Rollbalgs einen Abrollkolbenbereich aufweisen, an dem der Rollbalg bei einer Federbewegung unter Ausbildung einer zweiten Rollfalte abrollt. Dadurch ist zusätzlich zur am ersten Befestigungsteil ausgebildeten ersten Rollfalte auch am zweiten Befestigungsteil, d. h. am Zwischenteil des zweiten Befestigungsteils eine zweite Rollfalte ausgebildet. Durch die Ausbildung der zweiten Rollfalte am Abrollkolbenbereich des Zwischenteils wird der Angriffspunkt der über den Rollbalg eingeleiteten Druckkräfte abgesenkt, so dass dadurch der Abstand zwischen diesem Angriffspunkt und dem Drehpunkt des Zwischenteils, der durch den Konuslagerring definiert ist, größer wird. Somit ergibt sich vorteilhaft ein stabileres Kräftegleichgewicht am Zwischenteil, wie dies bereits oben näher ausgeführt ist.

In einer Weiterbildung gemäß Anspruch 5 kann das Zwischenteil an den Abrollkolbenbereich anschließend einen radial auskragenden Schulterbereich aufweisen für eine Führung und/oder Abstützung des Rollbalgs. Dadurch kann in Abhängigkeit der geometrischen Ausbildung des auskragenden Schulterbereichs am Zwischenteil eine entsprechend gewünschte Führung und/oder Abstützung des Rollbalgs bzw. der zweiten Rollfalte an diesem Schulterbereich herbeigeführt werden, so dass dadurch insgesamt die Federeigenschaften beeinflusst werden können.

Eine weitere Möglichkeit der Einstellung der Federeigenschaften besteht darin, dass gemäß Anspruch 6 der Abrollkolbenbereich des ersten Befestigungsteils konusförmig ausgebildet ist. Ist der Abrollkolbenbereich des ersten Befestigungsteils konusförmig ausgebildet und zugleich am zweiten Befestigungsteil, d. h. am Zwischenteil des zweiten Befestigungsteils, ein radial auskragender Schulterbereich an den dortigen Abrollkolbenbereich anschließend ausgebildet, so wird dadurch bei einer Federbewegung der Luftfeder das Abrollen der beiden Rollfalten entsprechend beeinflusst. So kann der Rollbalg beispielsweise dahingehend ausgelegt sein, dass bei einer Federbewegung zuerst die zweite Rollfalte bis zum Schulterbereich am Abrollkolbenbereich des Zwischenteils abrollt und anschließend aufgrund des sich verjüngenden Abrollkolbenbereichs des ersten Befestigungsteils ein Abrollen der ersten Rollfalte entlang dieses Abrollkolbenbereichs erfolgt.

Nach Anspruch 7 kann der Rollbalg am ersten Befestigungsteil und/oder am zweiten Befestigungsteil mittels eines Spannringes befestigt sein. Mit dem Spannring ist ein einfaches und kostengünstiges Befestigungsmittel vorgeschlagen, mittels dem der Rollbalg funktionssicher am ersten Befestigungsteil und/oder am zweiten Befestigungsteil angebunden werden kann. Insbesondere aufgrund der ersten und/oder der zweiten Rollfalte des Rollbalgs ist darauf zu achten, dass für die Anbindung des Rollbalgs am jeweiligen Befestigungsteil eine entsprechende radiale Zugänglichkeit zum Spannring einfach möglich ist.

Für eine einfache Ausbildung des zweiten Befestigungsteils kann nach Anspruch 8 das Lagerteil durch einen Luftfedertopf gebildet sein, wobei das Zwischenteil nach Anspruch 9 durch einen Zwischenring gebildet sein kann. Ein derartiger Zwischenring kann beispielsweise durch eine einfache Umformung eines Rohrstücks aus einem Blechmaterial hergestellt werden, so dass im Querschnitt gesehen der Abrollkolbenbereich, der auskragende Schulterbereich und der Zwischenteil-Konuslagerringbereich jeweils aneinander anschließend am Zwischenring ausgebildet sind.

Anhand einer Zeichnung wird ein Ausführungsbeispiel der Erfindung näher erläutert.

Es zeigen:
- **Fig. 1**: einen schematischen Längsschnitt durch eine erfindungsgemäße Luftfeder,
- **Fig. 2**: einen schematischen Längsschnitt der Luftfeder von Fig. 1, wobei ein zweites Befestigungsteil versetzt gegenüber einem ersten Befestigungsteil dargestellt ist, und
- **Fig. 3**: einen schematischen Längsschnitt einer erfindungsgemäßen Luftfeder mit einer zweiten Rollfalte.

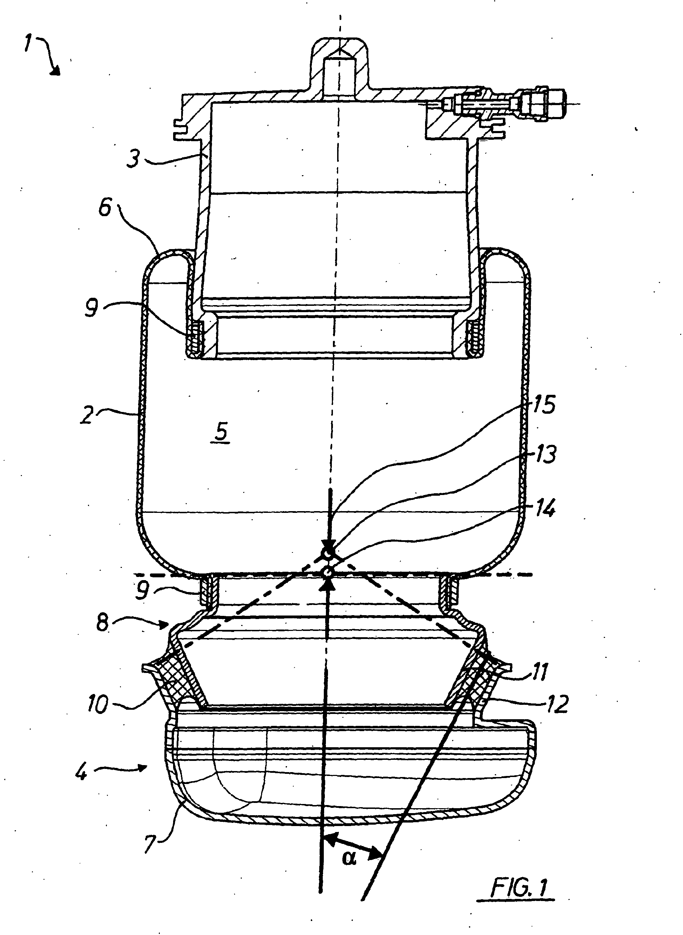

In **Fig. 1** ist schematisch ein Längsschnitt durch eine Luftfeder 1 dargestellt. Die Luftfeder 1 weist einen elastomeren Rollbalg 2 auf, der einerseits an einem ersten Befestigungsteil 3 und andererseits an einem zum ersten Befestigungsteil 3 axial beabstandeten zweiten Befestigungsteil 4 jeweils luftdicht angebunden ist. Dadurch wird ein volumenvariabler Luftfederraum 5 ausgebildet. Die beiden Befestigungsteile 3 und 4 sind an hier nicht näher dargestellten gegeneinander abzufedernden Bauteilen, wie z. B. eine Fahrzeugkarosserie und eine Radaufhängung, befestigt.

Das erste Befestigungsteil 3 ist dabei als Abrollkolben ausgebildet, an dem der Rollbalg 2 bei einer im wesentlichen axial ausgerichteten Federbewegung der Luftfeder 1 unter Ausbildung einer ersten Rollfalte 6 abrollt. Der Abrollkolbenbereich des ersten Befestigungsteils 3 kann dabei konusförmig ausgebildet sein.

Das zweite Befestigungsteil 4 ist zweiteilig aus einem Lagerteil 7 und einem Zwischenteil 8 aufgebaut. Das Lagerteil 7 kann an dem hier nicht näher dargestellten Bauteil befestigt werden, wobei am Zwischenteil 8 der Rollbalg 2 angebunden ist. Beide Anbindungen des Rollbalgs 2, nämlich einerseits am ersten Befestigungsteil 3 und andererseits am Zwischenteil 8, sind jeweils mittels eines Spannringes 9 ausgebildet. Das Lagerteil 7 und das Zwischenteil 8 sind luftdicht mit einem umlaufenden Federlagerring 10, der aus einem Elastomermaterial hergestellt ist, verbunden. Dieser umlaufende Federlagerring ist dabei als Konuslagerring 10 ausgebildet, der im Querschnitt gesehen schräg gegenüber der Axialrichtung der Luftfeder 1 um einen Anstellwinkel α angestellt ist. Die Konusverjüngung des Konuslagerrings 10 ist vom Rollbalg 2 weggerichtet, so dass das Zwischenteil 8 gegenüber dem Lagerteil 7 kardanisch bewegt werden kann. Der Konuslagerring 10 ist dabei zwischen einem Zwischenteil-Konuslagerringbereich 11 und einem Lagerteil-Konuslagerringbereich 12 einvulkanisiert. Die beiden Konuslagerringbereiche 11 und 12 sind dabei im zusammengebauten Zustand der Luftfeder 1 einander zugeordnet und voneinander beabstandet angeordnet.

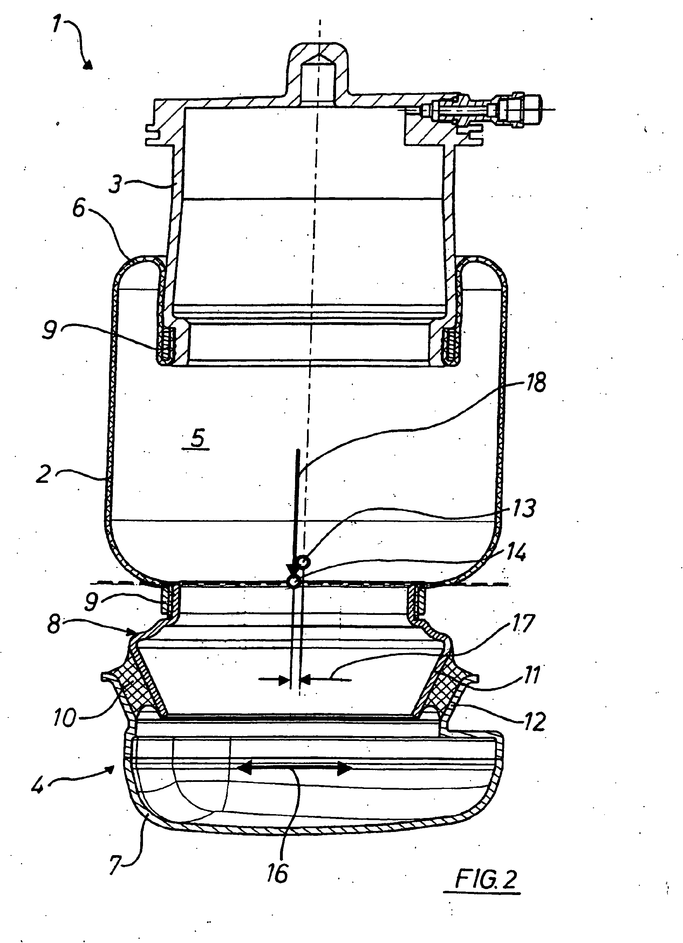

Durch das Anstellen des Konuslagerrings 10 um den Anstellwinkel α ergibt sich ein Drehpunkt 13 des Lagers, der schematisch mit einem Kreissymbol in **Fig. 1** eingezeichnet ist. Mit einem weiteren Kreissymbol ist ein Angriffspunkt 14 der über den Rollbalg 2 eingeleiteten Druckkräfte 18 eingezeichnet. Der Anstellwinkel α ist dabei so auszuführen, dass der Drehpunkt 13 des Zwischenteils 8 mit einem Abstand 15 oberhalb des Angriffspunkts 14 der über den Rollbalg 2 eingeleiteten Druckkräfte 18 liegt. Dadurch ergibt sich ein stabiles Kräftegleichgewicht am Zwischenteil 8. Eine Auslenkung 16 des zweiten Befestigungsteiles 4, wie dies schematisch in **Fig. 2** in einer Schnittdarstellung der Luftfeder 1 dargestellt ist, bewirkt einen Versatz 17, so dass der Angriffspunkt 14, der über den Rollbalg 2 eingeleiteten Druckkraft 18 und der Drehpunkt 13 des Zwischenteils 8 in Axialrichtung gesehen nicht mehr auf einer Linie liegen. Dieser Versatz 17 ergibt in Verbindung mit der Druckkraft 18 ein Rückstellmoment, so dass dadurch das stabile Kräftegleichgewicht am Zwischenteil 8 wieder hergestellt ist. Je größer der Abstand 15 zwischen dem Drehpunkt 13 und dem Angriffspunkt 14 der Druckkraft 18 ist, umso größer ist diese Rückstellwirkung.

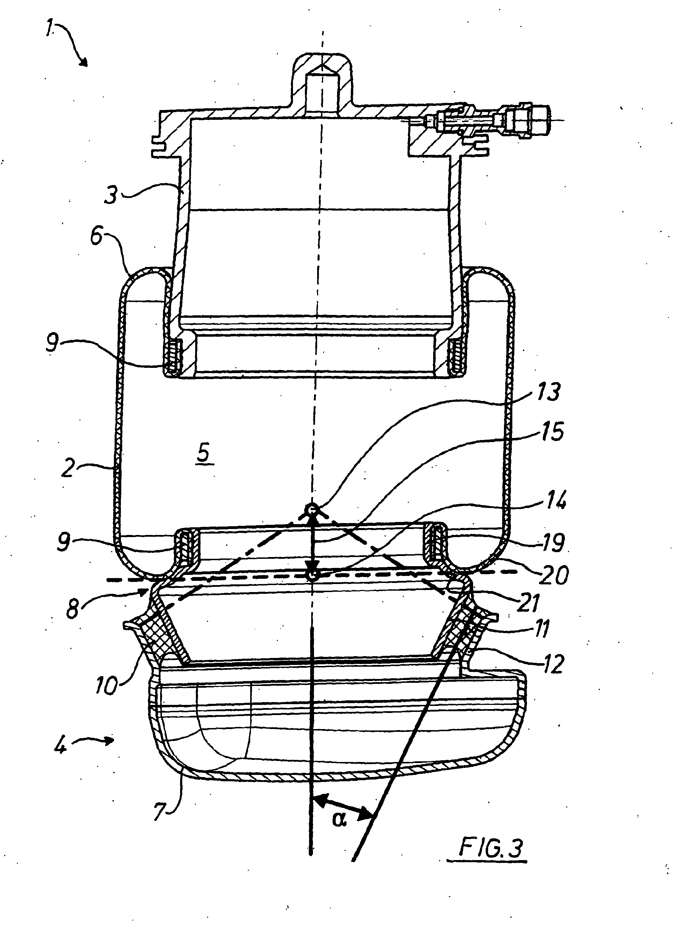

Eine einfache Möglichkeit der Vergrößerung des Abstandes 15 zwischen dem Drehpunkt 13 und dem Angriffspunkt 14 ist in einer schematischen Schnittdarstellung in **Fig. 3** gezeigt. Dabei ist ein analoger Aufbau der Luftfeder 1 wie der in den **Fig. 1** und **2** beschriebene gezeigt, wobei am Zwischenteil 8 ein Abrollkolbenbereich 19 durch den Rollbalg 2 genutzt wird, dass dieser bei einer Federbewegung unter Ausbildung einer zweiten Rollfalte 20 abrollt. An den Abrollkolbenbereich 19 anschließend ist am Zwischenteil 8 ein radial auskragender Schulterbereich 21 ausgebildet, der eine Führung und/oder Abstützung des Rollbalges 2 bzw. der zweiten Rollfalte 20 darstellt.

Im in den **Fig. 1** bis **3** dargestellten Ausführungsbeispiel der Luftfeder 1 ist das Zwischenteil 8 als Zwischenring ausgebildet, der im Querschnitt gesehen aneinander anschließend den Abrollkolbenbereich 19, den Schulterbereich 21 und den Zwischenteil-Konuslagerringbereich 11 aufweist. Der Abrollkolbenbereich 19 ist dabei in etwa parallel zur Axialrichtung der Luftfeder 1 ausgerichtet, wobei der Schulterbereich 21 radial auskragend ausgebildet ist und an diesen anschließend der Zwischenteil-Konuslagerringbereich 11 sich entsprechend dem Anstellwinkel α vom Rollbalg 2 weggerichtet verjüngt.

## Patentansprüche

1. Luftfederanordnung für ein Kraftfahrzeug, mit einem elastomeren Rollbalg (2), der einerseits an einem ersten Befestigungsteil (3) und andererseits an einem zum ersten Befestigungsteil (3) axial beabstandeten zweiten Befestigungsteil (4) jeweils luftdicht angebunden ist zur Ausbildung eines volumenvariablen Luftfederraumes, wobei die beiden Befestigungsteile (3, 4) an den gegeneinander abzufedernden Bauteilen befestigt sind,
wobei das erste Befestigungsteil (3) als Abrollkolben ausgebildet ist, an dem der Rollbalg (2) bei einer im wesentlichen axial ausgerichteten Federbewegung unter Ausbildung einer Rollfalte abrollt, und
wobei das zweite Befestigungsteil (4) zweiteilig aus einem Lagerteil (7), das an einem Bauteil befestigbar ist, und einem Zwischenteil (8), an dem der Rollbalg angebunden ist, aufgebaut ist, wobei das Lagerteil (7) und das Zwischenteil (8) luftdicht mit einem umlaufenden Federlagerring (10) aus Elastomermaterial verbunden sind, wobei der umlaufende Federlagerring als Konuslagerring (10) ausgebildet ist, der im Querschnitt gesehen schräg gegenüber der Axialrichtung der Luftfeder (1) um einen Anstellwinkel (α) angestellt ist,
**dadurch gekennzeichnet,**
**dass** in der Einbaulage der Luftfeder (1) mit etwa vertikaler Ausrichtung der Abrollkolben (3) am oberen Bereich des Rollbalgs (2) und das zweite Befestigungsteil (4) mit dem Konuslagerring (10) am unteren Bereich des Rollbalgs (2) angeordnet ist, und
**dass** die Konusverjüngung des Konuslagerrings (10) vom Rollbalg (2) weg bezogen auf die Einbaulage in einen Bereich unterhalb des Konuslagerrings (10) gerichtet ist, so dass das Zwischenteil (8) gegenüber dem Lagerteil (7) kardanisch mit einer Rückstellwirkung bewegbar ist, wobei am Zwischenteil (8) ein sich nach unten verjüngender Zwischenteil-Konuslagerringbereich (11) und am Lagerteil (7) ein nach oben sich öffnender Lagerteil-Konuslagerringbereich (12) ausgebildet sind, die im zusammengebauten Zustand der Luftfeder (1) einander zugeordnet und beabstandet voneinander so angeordnet sind, dass der Zwischenteil-Konuslagerringbereich (11) im Lagerteil-Konuslagerringbereich (12) von oben her einliegt und der Konuslagerring (10) dazwischen einvulkanisiert ist.

2. Luftfederanordnung nach Anspruch 1, **dadurch gekennzeichnet, dass** der Anstellwinkel (α) in einem Bereich zwischen 15 und 40°, bevorzugt zwischen 20 und 30°, höchstbevorzugt bei 25° liegt.

3. Luftfederanordnung nach Anspruch 1 oder 2, **dadurch gekennzeichnet, dass** der Durchmesser des Federlagerrings (10) etwa dem wirksamen Durchmesser der Luftfeder (1) entspricht.

4. Luftfederanordnung nach einem der Ansprüche 1 bis 3, **dadurch gekennzeichnet, dass** das Zwischenteil (8) wenigstens im Bereich der Anbindung des Rollbalgs (2) einen Abrollkolbenbereich (19) aufweist, an dem der Rollbalg (2) bei einer Federbewegung unter Ausbildung einer zweiten Rollfalte (20) abrollt.

5. Luftfederanordnung nach Anspruch 4, **dadurch gekennzeichnet, dass** das Zwischenteil (8) an den Abrollkolbenbereich (19) anschließend einen radial auskragenden Schulterbereich (21) aufweist für eine Führung und/oder Abstützung des Rollbalgs (2).

6. Luftfederanordnung nach einem der Ansprüche 1 bis 5, **dadurch gekennzeichnet, dass** der Abrollkolbenbereich des ersten Befestigungsteils (3) vorzugsweise konusförmig ausgebildet ist.

7. Luftfederanordnung nach einem der Ansprüche 1 bis 6, **dadurch gekennzeichnet, dass** der Rollbalg (2) am ersten Befestigungsteil (3) und/oder am zweiten Befestigungsteil (4) mittels eines Spannringes (9) befestigt ist.

8. Luftfederanordnung nach einem der Ansprüche 1 bis 7, **dadurch gekennzeichnet, dass** das Lagerteil (7) durch einen Luftfedertopf gebildet ist.

9. Luftfederanordnung nach einem der Ansprüche 1 bis 8, **dadurch gekennzeichnet, dass** das Zwischenteil (8) durch einen Zwischenring gebildet ist.

## Claims

1. Air spring arrangement for a motor vehicle, comprising elastomeric roll bellows (2) connected in an airtight manner on one side to a first fastening part (3) and on the other side to a second fastening part (4) arranged at an axial distance from the first fastening part (3) in order to form an air spring chamber of variable volume, the two fastening parts (3, 4) being fastened to the components to be cushioned relative to one another,
the first fastening part (3) being designed as a roller piston on which the roll bellows (2) roll in the event of a substantially axially oriented spring movement with the formation of a rolling fold, and
the second fastening part (4) being made of two parts, a bearing part (7) which can be fastened to one component and an intermediate part (8) to which the roll bellows are connected, the bearing part (7) and the intermediate part (8) being connected in an airtight manner to a circumferential spring bearing ring (10) of elastomeric material, and the circumferential spring bearing ring being designed as a conical bearing ring (10) set at an angle of inclination (α) relative to the axial direction of the air spring (1) as viewed in cross section,
**characterised in that**,
in the installation position of the air spring (1) with approximately vertical alignment, the roller piston (3) is arranged on the upper region of the roll bellows (2) and the second fastening part (4) with the conical bearing ring (10) is arranged on the lower region of the roll bellows (2), and
**in that** the taper of the conical bearing ring (10) is directed away from the roll bellows (2) in relation to the installation position into a region below the conical bearing ring (10) so that the intermediate part (8) can move universally in relation to the bearing part (7) with a return action, a downwardly tapering conical bearing ring region (11) being formed on the intermediate part (8) and an upwardly opening conical bearing ring region (12) being formed on the bearing part (7), these conical bearing ring regions being associated with one another in the assembled state of the air spring (1) and being arranged at a distance from one another in such a manner that the conical bearing ring region (11) on the intermediate part lies in the conical bearing ring region (12) on the bearing part from above and the conical bearing ring (10) is vulcanised in therebetween.

2. Air spring arrangement according to claim 1, **characterised in that** the angle of inclination (α) is in a range between 15 and 40°, preferably between 20 and 30°, most preferably 25°.

3. Air spring arrangement according to claim 1 or claim 2, **characterised in that** the diameter of the spring bearing ring (10) corresponds approximately to the effective diameter of the air spring (1).

4. Air spring arrangement according to one of claims 1 to 3, **characterised in that** the intermediate part (8) is provided at least in the region of the connection of the roll bellows (2) with a roller piston region (19) on which the roll bellows (2) roll in the event of a spring movement with the formation of a second rolling fold (20).

5. Air spring arrangement according to claim 4, **characterised in that** the intermediate part (8) is provided after the roller piston region (19) with a radially projecting shoulder region (21) for guiding and/or supporting the roll bellows (2).

6. Air spring arrangement according to one of claims 1 to 5, **characterised in that** the roller piston region of the first fastening part (3) is preferably conical.

7. Air spring arrangement according to one of claims 1 to 6, **characterised in that** the roll bellows (2) are fastened to the first fastening part (3) and/or to the second fastening part (4) by means of a clamping ring (9).

8. Air spring arrangement according to one of claims 1 to 7, **characterised in that** the bearing part (7) is formed by an air spring cup.

9. Air spring arrangement according to one of claims 1 to 8, **characterised in that** the intermediate part (8) is formed by an intermediate ring.

## Revendications

1. Ensemble de suspension pneumatique pour un véhicule automobile, avec un soufflet roulant (2) en élastomère qui est relié de manière étanche à l'air respectivement d'une part à un premier élément de fixation (3) et d'autre part à un second élément de fixation (4) espacé axialement du premier élément de fixation (3) pour la réalisation d'un espace de suspension pneumatique au volume variable, les deux éléments de fixation (3, 4) étant fixés sur les composants à suspendre sur ressort les uns contre les autres,
dans lequel le premier élément de fixation (3) est réalisé comme un piston de déroulement, sur lequel roule le soufflet roulant (2) lors d'un mouvement de ressort orienté essentiellement axialement en réalisant un pli enroulé, et
dans lequel le second élément de fixation (4) est constitué de deux parties d'un élément de palier (7) qui peut être fixé sur un composant, et d'un élément intermédiaire (8), auquel le soufflet roulant est relié, l'élément de palier (7) et l'élément intermédiaire (8) étant reliés de manière étanche à l'air à une bague de ressort formant palier périphérique (10) en matière élastomère, la bague de ressort formant palier périphérique étant réalisée comme une bague de palier conique (10) qui est serrée vue en section transversale en biais par rapport au sens axial du ressort pneumatique (1) selon un angle de serrage (α),
**caractérisé en ce que**
en position de montage du ressort pneumatique (1) avec un alignement à peu près vertical, le piston de déroulement (3) est disposé sur la zone supérieure du soufflet roulant (2) et le second élément de fixation (4) avec la bague de palier conique (10) est disposé sur la zone inférieure du soufflet roulant (2) et
le rétrécissement conique de la bague de palier conique (10) est dirigé à distance du soufflet roulant (2) par rapport à la position de montage dans une zone au-dessous de la bague de palier conique (10) de sorte que l'élément intermédiaire (8) puisse être déplacé par rapport à l'élément de palier (7) à la manière de Cardan avec un effet de rappel, une zone de bague de palier conique de l'élément intermédiaire (11) se rétrécissant vers le bas étant réalisée sur l'élément intermédiaire (8) et une zone de bague de palier conique de l'élément de palier (12) s'ouvrant vers le haut étant réalisée sur l'élément de palier (7), lesquelles sont disposées associées l'une à l'autre et espacées l'une de l'autre à l'état assemblé du ressort pneumatique (1), de sorte que la zone de bague de palier conique de l'élément intermédiaire (11) soit mise en place dans la zone de bague de palier conique de l'élément de palier (12) par le dessus et la bague de palier conique (10) soit vulcanisée entre les deux.

2. Ensemble de suspension pneumatique selon la revendication 1, **caractérisé en ce que** l'angle de serrage (α) se trouve dans une plage comprise entre 15 et 40°, de préférence entre 20 et 30°, de manière extrêmement préférée s'élève à 25°.

3. Ensemble de suspension pneumatique selon la revendication 1 ou 2, **caractérisé en ce que** le diamètre de la bague de palier de ressort (10) correspond à peu près au diamètre utile du ressort pneumatique (1).

4. Ensemble de suspension pneumatique selon l'une quelconque des revendications 1 à 3, **caractérisé en ce que** l'élément intermédiaire (8) présente au moins dans la zone de liaison du soufflet roulant (2), une zone de piston de déroulement (19), sur laquelle le soufflet roulant (2) roule lors d'un mouvement de ressort en réalisant un second pli enroulé (20).

5. Ensemble de suspension pneumatique selon la revendication 4, **caractérisé en ce que** l'élément intermédiaire (8) présente jouxtant la zone de piston de déroulement (19) une zone d'épaulement (21) en saillie radiale pour un guidage et/ou appui du soufflet roulant (2).

6. Ensemble de suspension pneumatique selon l'une quelconque des revendications 1 à 5, **caractérisé en ce que** la zone de piston de déroulement du premier élément de fixation (3) est réalisée de préférence en forme de cône.

7. Ensemble de suspension pneumatique selon l'une quelconque des revendications 1 à 6, **caractérisé en ce que** le soufflet roulant (2) est fixé sur le premier élément de fixation (3) et/ou sur le second élément de fixation (4) au moyen d'une bague de serrage (9).

8. Ensemble de suspension pneumatique selon l'une quelconque des revendications 1 à 7, **caractérisé en ce que** l'élément de palier (7) est formé par un pot de suspension pneumatique.

9. Ensemble de suspension pneumatique selon l'une quelconque des revendications 1 à 8, **caractérisé en ce que** l'élément intermédiaire (8) est formé par une bague intermédiaire.
